(19) Europäisches Patentamt
European Patent Office
Office européen des brevets

(11) Numéro de publication : **0 240 529 B2**

# (12) NOUVEAU FASCICULE DE BREVET EUROPEEN

(45) Date de publication du nouveau fascicule du brevet : **10.11.93 Bulletin 93/45**

(51) Int. Cl.$^5$ : **G11B 5/706**

(21) Numéro de dépôt : **86905853.7**

(22) Date de dépôt : **30.09.86**

(86) Numéro de dépôt international : **PCT/FR86/00337**

(87) Numéro de publication internationale : **WO 87/02173 09.04.87 Gazette 87/08**

## (54) COMPOSITIONS D'OXYDES MAGNETIQUES PARTICULAIRES A STRUCTURE DE TYPE SPINELLE LACUNAIRE, LEUR PREPARATION ET LEUR APPLICATION.

(30) Priorité : **30.09.85 FR 8514439**

(43) Date de publication de la demande : **14.10.87 Bulletin 87/42**

(45) Mention de la délivrance du brevet : **13.12.89 Bulletin 89/50**

(45) Mention de la décision concernant l'opposition : **10.11.93 Bulletin 93/45**

(84) Etats contractants désignés : **AT BE CH DE FR GB IT LI LU NL SE**

(56) Documents cités :
**DE-A- 2 221 264**
**DE-B- 2 347 486**
**FR-A- 2 245 345**
**US-A- 4 321 302**
**Chemical Abstracts 98 (18) : 154 104x**
**Derwent C 85-070543**
**Chemical Abstracts 102 : 177989e**
**Chemical Abstracts 97 : 201750w**
**Chemical Abstracts 84 (18) : 129746m**
**Chemical Abstracts 100: 78764e**
**Salmang/Scholze, Die physikalischen und chemischen Grundlagen der Keramik, 5. Auflage, 1968, p. 138 f.**
**Harders/Kienow, Feuerfestkunde, 1960, S. 33**
**Derwent C85-123828**

(73) Titulaire : **CENTRE NATIONAL DE LA RECHERCHE SCIENTIFIQUE (CNRS)**
**15, Quai Anatole France**
**F-75700 Paris Cedex 07 (FR)**
Titulaire : **UNIVERSITE PAUL SABATIER (TOULOUSE III)**
**118 Route de Narbonne**
**F-31077 Toulouse Cédex (FR)**

(72) Inventeur : **ROUSSET, Abel**
**16, rue Jean Moulin**
**F-31520 Ramonville St Agne (FR)**
Inventeur : **BONINO SALVAING, Christiane**
**119, rue Achille Viadieu**
**F-31400 Toulouse (FR)**
Inventeur : **MOLLARD, Paul**
**Chemin de la Briot Murianette**
**F-38420 Domène (FR)**
Inventeur : **GOUGEON, Michel**
**28, rue Henri de Sahuqué**
**F-31400 Toulouse (FR)**
Inventeur : **TAILHADES, Philippe**
**25, rue du Fort**
**F-81200 Mazamet (FR)**

(74) Mandataire : **Tonnellier, Jean-Claude et al**
**Cabinet Nony & Cie. 29, rue Cambacérès**
**F-75008 Paris (FR)**

EP 0 240 529 B2

## Description

La présente invention a pour objet de nouvelles compositions d'oxydes magnétiques particulaires à structure de type spinelle lacunaire, leur préparation et leur application.

On sait que dans l'industrie des matériaux pour l'enregistrement magnétique de haute densité, on utilise actuellement des poudres d'oxydes de métaux ferromagnétiques sous la forme de particules aciculaires submicroniques avant un champ coercitif élevé et de fortes aimantations à saturation et rémanente.

Ces poudres magnétiques peuvent être préparées au départ de sels organiques et en particulier au départ d'oxalates mixtes.

Dans la demande de brevet français 72.14215 (n° de publication 2180575) on a proposé un procédé de préparation d'oxydes magnétiques du type ferrite, c'est-à-dire de composés à base de sesquioxyde de fer dans lesquels une partie des ions ferriques et des lacunes est remplacée par un ou plusieurs cations divalents.

Les cations divalents compatibles avec une structure cubique de type spinelle sont ceux du cobalt, du fer, du zinc, du cuivre, du magnésium, du nickel, du manganèse et du cadmium.

Le procédé du brevet français cité consiste, au départ d'un oxalate mixte, à décomposer cet oxalate par chauffage à l'air à température modérée pour obtenir un oxyde superparamagnétique (en raison des dimensions très réduites des cristallites, de l'ordre de quelques dizaines d'angströms, un angström représentant $10^{-10}$ mètre), à réduire cet oxyde par l'hydrogène en présence de vapeur d'eau pour orienter la cristallisation de l'oxyde, encore mal organisée, vers un réseau cubique du type spinelle et obtenir une magnétite substituée par un ou plusieurs métaux divalents, et enfin à oxyder la magnétite ainsi obtenue pour faire passer la totalité du fer à l'état trivalent. On obtient ainsi des solutions solides de gamma-$Fe_2O_3$ et de ferrites du type $MFe_2O_3$, M représentant un ou plusieurs métaux divalents choisis parmi ceux mentionnés précédemment.

Le procédé de transformation des oxalates en oxydes qui vient d'être décrit permet d'obtenir des particules d'oxydes magnétiques ayant, dans leur majorité, bien conservé la forme et les dimensions des particules d'oxalate initiales. Toutefois, ce procédé n'est pas entièrement satisfaisant pour les raisons qui vont être indiquées.

Il convient de mentionner ici que lors de la préparation des particules d'oxydes, il y a formation, à l'intérieur des particules, de domaines de matière bien formés (les cristallites) séparés par des zones de transition (les joints de cristallites) et des micropores.

Dans la présente demande, on désignera par texture ces arrangements de la matière à l'intérieur d'une particule, par frittage inteme l'amélioration de cette texture sous l'influence de traitements thermiques, et par frittage exteme le frittage compris dans son sens habituel conduisant à la soudure des particules entre elles avec apparition de dendrites. Le frittage inteme permet d'améliorer les performances magnétiques, le frittage exteme entraîne au contraire une dégradation importante de celles-ci.

Or, le procédé qui vient d'être décrit n'est pas satisfaisant en ce qui concerne la texture des particules d'oxydes obtenues. Les particules ont une structure granulaire, et présentent des joints de cristallites, avec la présence de dendrites.

La présence de joints de cristallites a une influence défavorable non seulement sur les propriétés magnétiques, mais aussi sur les propriétés de résistance mécanique des particules. En effet, les joints de cristallites constituent des amorces de points de rupture des grains qui, lors des manipulations ultérieures de la poudre, ont tendance à se briser en granules ayant souvent une forme sensiblement sphérique non compatible avec de bonnes propriétés magnétiques.

Les poudres obtenues après ces manipulations sont donc relativement hétérogènes.

En définitive, ces défauts de la texture ne permettent pas d'obtenir des poudres d'oxydes répondant aux exigences actuelles dans le domaine de l'enregistrement magnétique.

La présente invention a pour objet des compositions d'oxydes magnétiques particulaires contenant de nouveaux éléments adjuvants ou substituants.

Les adjuvants favorisent le frittage inteme et permettent d'améliorer de façon importante la texture des particules et d'éviter le frittage exteme. Les particules obtenues ont une texture homogène et non granulaire, avec absence de dendrites. Cette homogénéité de texture se traduit par une diminution notable des bruits de fond.

L'introduction de nouveaux éléments substituants, permettant de modifier les propriétés magnétiques et d'améliorer la stabilité chimique, donne une grande latitude pour adapter et moduler les propriétés des matériaux suivant les exigences requises.

En outre, grâce à des améliorations apportées au procédé de préparation des oxalates de départ (améliorations qui ne font pas partie de l'invention revendiquée ici) et grâce également à des perfectionnements apportés au procédé de transformation des oxalates en oxydes, il a été possible d'obtenir de façon contrôlée et reproductible de nouvelles compositions d'oxydes ayant des dimensions de particules convenables et une stabilité thermique et chimique satisfaisantes.

Il convient de remarquer que les diverses améliorations faisant l'objet de la présente invention ont permis d'introduire, dans le réseau cristallin des oxydes, des ions tels que les ions de métaux alcalino-terreux, de terres rares ou de potassium, alors que l'on considère généralement que les ions dont le rayon est égal

ou supérieur à 1 Angström ($10^{-10}$ mètre) ne peuvent pas rentrer dans un réseau cristallin du type spinelle comme celui de gamma-$Fe_2O_3$; voir par exemple PASCAL, Traité de chimie minérale, tome XVII, pp. 629-630.

L'intégration de ces ions dans le réseau cristallin peut être démontrée par l'augmentation de la température de transformation du système cristallin détectée par l'analyse thermique différentielle. On sait en effet que la température de transformation de gamma-$Fe_2O_3$ est de l'ordre de 460 °C environ. Avec la substitution de cobalt et de zinc, à raison de 5 % en poids au total, cette température de transformation passe à 560 °C environ. Comme le montre la partie expérimentale ci-après, l'addition de baryum, par exemple, permet d'augmenter très nettement la température de transformation, et ce résultat montre bien que l'ion baryum est intégré dans le réseau cristallin dont il augmente la stabilité.

Il faut noter, en outre, qu'il n'est d'ailleurs pas nécessaire que l'élément ajouté soit dans le réseau cristallin de l'oxyde à base de fer puisque la surface spécifique et la texture peuvent être modifiées par un élément qui se trouve en-dehors du réseau cristallin. C'est en particulier le cas du potassium qui, au-delà de 2 % en poids, ne rentre plus dans le réseau cristallin, mais qui influence de façon importante la taille des cristallites et la surface spécifique.

La présente invention a donc pour objet de nouvelles compositions d'oxydes magnétiques particulaires à base d'oxyde de fer (III) et d'oxyde d'au moins un métal divalent choisi parmi le cobalt, le fer, le cuivre, le zinc, le magnésium, le nickel, le manganèse et le cadmium, caractérisées par le fait que lesdites compositions contiennent en outre, sous forme d'oxyde, à raison de 0,2 à 5 % en poids par rapport au poids total, au moins un adjuvant ou subsituant choisi parmi les métaux alcalins (notamment lithium, sodium, potassium), les métaux alcalino-terreux (calcium, baryum, strontium), le bore, les éléments des colonnes 3, 4 et 5 de la classification périodique des éléments ayant une masse moléculaire supérieure à 26, à l'exclusion du silicium et à l'exclusion du phosphore, les métaux de transition 3d et 4d dont la liste est donnée ci-après et les terres rares, étant entendu que lorsqu'un métal alcalin ou l'étain est présent, au moins un autre adjuvant ou substituant est également présent, et par le fait que lesdites compositions ont une structure de type spinelle lacunaire.

Le pourcentage en poids indiqué concerne l'élément adjuvant ou substituant et non l'oxyde correspondant

Les éléments des colonnes 3 à 5 de la classification périodique ayant une masse moléculaire supérieure à 26 sont notamment: l'aluminium, le gallium, le germanium, l'arsenic, l'indium, l'antimoine, le bismuth et le plomb.

Les métaux de transition 3d dont la présence peut constituer une caractéristique des compositions de l'invention sont: le scandium, le titane, le vanadium, et le chrome.

Les métaux de transition 4d dont la présence peut constituer une caractéristique des compositions de l'invention sont: l'yttrium, le zirconium, le niobium et le molybdène.

Parmi les terres rares pouvant être présentes dans les compositions de l'invention, on citera en particulier le néodyme, le praséodyme, le samarium, l'europium, le gadolinium, le terbium, le dysprosium, l'holmium, l'erbium, l'ytterbium, le lutétium, le cérium, le thulium, etc...

Généralement, le métal divalent qui est présent dans la composition de l'invention représente de 1 à 10 % de préférence 1 à 5 % en poids de ladite composition.

Les faibles taux de substituants ou d'adjuvants présents dans les compositions de l'invention rendent difficile la caractérisation de ces compositions par l'étude des modifications des paramètres du réseau cristallin par diffraction des rayons X. Le meilleur critère permettant de caractériser l'introduction de substituants dans le réseau cristallin est la modification de la température de transformation gamma alpha, qui varie fortement avec la nature et le taux de substituant.

Les compositions particulaires de l'invention sont notamment des compositions formées de particules aciculaires ayant des dimensions de quelques micromètres au plus, et en particulier des compositions dont les particules ont des longueurs de 0,05 à 0,5 μm, avec un rapport aciculaire de 2 à 5, dont l'utilisation est recommandée pour l'enregistrement magnétique.

Parmi les compositions particulaires de l'invention, on citera en particulier celles pour lesquelles au moins 80 % des particules ont une longueur égale à la longueur moyenne + 0,1 μm, et un rapport aciculaire compris entre 2 et 5 environ, la longueur moyenne étant comprise entre 0,15 et 0,35 μm environ.

De telles compositions peuvent être obtenues en choisissant des compositions d'oxalates de départ dont les particules ont les caractéristiques de taille et de forme adaptées, en tenant compte du fait que, lors de la transformation des oxalates en oxydes selon le procédé de l'invention, la longueur des particules est divisée par un nombre pouvant varier de 1,5 à 2 environ, et le rapport aciculaire est divisé par un nombre pouvant varier de 1,5 à 2,5 environ.

Le procédé de préparation des oxalates de départ et des oxydes magnétiques particulaires finals permet même de préparer des compositions dans lesquelles au moins 85 % des particules, et même dans certains cas plus de 90 % des particules, présentent ces caractéristiques de dimensions.

L'invention a en particulier pour objet les compositions particulaires telles que définies précédemment dont la constitution chimique répond à la formule :

$$(1\text{-}z)\ Fe_2O_3,\ zMFe_2O_4,\ yM'^{(n)}O_{n/2}$$

dans laquelle

M représente au moins un métal divalent choisi parmi le cobalt, le fer, le zinc, le cuivre, le magnésium, le nickel, le manganèse et le cadmium,

M' représente un substituant ou adjuvant choisi parmi ceux mentionnés ci-dessus, étant entendu que lorsqu'un métal alcalin est présent, au moins un autre adjuvant ou substituant est également présent,

n est la valence de M',

z représente le nombre de moles de métal divalent M, z étant tel que le métal divalent représente 1 à 10 %, de préférence 1 à 5 % du poids total de la composition,

et y représente le nombre de moles de substituant et/ou d'adjuvant M', y étant tel que M' représente 0,2 à 5 % en poids de la composition.

Bien entendu, lorsque plusieurs substituants ou dopants M' sont présents, il faut tenir compte des valences et des proportions respectives des éléments M' pour calculer la quantité d'oxygène représentée par yn/2.

Si, par exemple, $yM'^{(n)}O_{n/2}$ représente deux oxydes des éléments $M'_{(1)}$ et $M'_{(2)}$, de valences respectives $n_1$ et $n_2$, présents dans les proportions molaires respectives $y_1$ et $y_2$ (avec $y_1 + y_2 = y$), alors yn/2 est exprimé par :

$$\frac{(n_1y_1\ +\ n_2y_2)}{2}$$

L'invention a également pour objet un procédé de préparation des compositions particulaires telles que définies ci-dessus.

Ce procédé, comprenant les étapes consistant à décomposer l'oxalate mixte de départ par chauffage à l'air, à réduire le produit obtenu en atmosphère d'hydrogène puis à oxyder par chauffage à l'air le produit réduit, est caractérisé par le fait qu'avant l'étape de réduction on soumet les oxydes obtenus après l'étape de décomposition à un traitement thermique en atmosphère oxydante à une température de 550-700 °C pendant un temps pouvant varier de 10 minutes à 5 heures environ.

Ce traitement thermique est effectué par exemple à l'air.

La montée en température, pour ce traitement thermique, doit être relativement rapide; elle est de préférence de 150-300°C/heure.

Cette étape de traitement thermique a pour but le frittage inteme des grains élémentaires, avec densification des particules, et permet d'éviter la formation de dendrites ou de particules à texture granulaire.

On détermine la température et la durée de traitement optimales, dans chaque cas, par l'observation en microscopie électronique d'échantillons de la composition traitée. On retient bien entendu les conditions qui conduisent à l'obtention de particules dont les cristallites ont les dimensions les plus élevées, c'est-à-dire, en pratique, de particules pour lesquelles on observe la disparition ou une diminution notable des joints de cristallites. La température et le temps de traitement doivent toutefois être suffisamment faibles pour éviter l'apparition du frittage exteme.

A la fin du traitement thermique on effectue une trempe, par exemple une trempe à l'air.

Généralement, dans l'oxalate mixte de départ, les éléments, autres que carbone et oxygène, sont présents dans les proportions souhaitées pour l'oxyde final.

Toutefois, il est également possible de mélanger les adjuvants, et même des éléments substituants, à l'oxalate de départ, en tant qu'additifs. On procède par exemple par imprégnation de l'oxalate avec une solution des éléments adjuvants et/ou substituants dans un solvant approprié. Dans ce cas, les éléments substituants, ou même adjuvants, ne sont présents principalement que dans les couches superficielles des particules d'oxydes finales.

Dans des modes de réalisation particuliers, le procédé de l'invention peut encore présenter les caractéristiques suivantes, prises isolément ou en combinaison :

- on effectue la décomposition des précurseurs oxaiiques et des additifs éventuels en atmosphère oxydante à une température de 180 à 300 °C avec une montée en température lente, par exemple inférieure à 20 °C/heure dans le cas où l'on opère à l'air; on effectue de préférence cette décomposition sur le matériau de départ présent en couche mince, de façon à obtenir une bonne homogénéité de température, avec balayage d'air; plus l'atmosphère est oxydante, plus la montée en température doit être lente ;
- on effectue l'étape de réduction en atmosphère constituée par un mélange d'hydrogène et d'un gaz inerte contenant 8 à 30 % en volume d'hydrogène et ne contenant pas de vapeur d'eau ou en contenant moins de 3 % en volume; on a en effet découvert que la présence d'eau en proportion trop importante provoquait une croissance trop rapide des cristallites à l'intérieur des aiguilles et conduisait de ce fait à leur éclatement et à leur rupture en particules sphériques ayant souvent des dimensions trop faibles et ne présentant pas l'anisotropie de forme requise; le gaz inerte est par exemple l'azote ;
- on effectue la réduction à température supérieure à 300 °C, de préférence à une température de 320-500 °C, jusqu'à disparition de la phase alpha-$Fe_2O_3$; le temps de chauffage doit être le plus court possible (généralement 1 à 2

heures) pour éviter le frittage exteme; l'étape de réduction est de préférence suivie par une trempe, par exemple à l'air. La disparition de la phase alpha-$Fe_2O_3$ peut être observée par diffraction des rayons X ;

- on effectue l'étape finale d'oxydation par chauffage à l'air, à une température de 100-500 °C avec une montée en température relativement rapide, par exemple 150 °C/h; on opère de préférence à la température minimale suffisante pour permettre l'oxydation souhaitée de la composition dans des temps acceptables, par exemple de l'ordre de 2 heures environ; on refroidit ensuite rapidement, par exemple par une trempe à l'air.

Le procédé de l'invention peut comporter, si désiré, une étape supplémentaire dans le cas où l'on souhaite augmenter la taille des cristallites. Pour cela, à la fin de l'étape de réduction, au lieu d'effectuer une trempe, on soumet la composition à un traitement thermique en atmosphère inerte (c'est-à-dire ni oxydante, ni réductrice, par exemple sous azote ou sous argon sec) à une température de 450 à 700 °C environ. La montée en température est par exemple de l'ordre de 150 à 250 °C/h. Un tel traitement thermique favorise la croissance des cristallites et la diminution de la porosité. On détermine dans chaque cas la température et la durée de traitement optimales en contrôlant l'évolution de la taille des cristallites obtenus, grâce à l'observation de la largeur des raies des spectres de diffraction des rayons X. A la fin de ce traitement thermique, on effectue une trempe, par exemple à l'air.

L'introduction de Fe(II) comme substituant peut être aisément réalisée dans la dernière étape du procédé, au cours de laquelle les magnétites sont oxydées. Pour éviter l'oxydation complète de Fe(II) en Fe(III), on peut soit effectuer l'oxydation à basse température (par exemple à 100-250 °C), soit limiter la consommation d'oxygène par réglage de la composition de l'atmosphère dans l'enceinte. Dans les autres cas, on effectue l'étape d'oxydation à une température plus élevée (200 à 500 °C).

L'introduction de Fe(II) dans le réseau cristallin est intéressante car c'est le seul substituant bon marché ayant un coefflcient de magnétostriction positif. Il peut notamment être associé au cobalt, dont le coefficient de magnétostriction est négatif.

Les compositions d'oxalates utilisées comme produits de départ dans le procédé de l'invention peuvent être préparés selon les procédés connus. Elles peuvent aussi être préparées par un procédé caractérisé par le fait:

- que, d'une part, on prépare une solution contenant de 0,1 à 1 mole par litre d'acide oxalique dans un premier solvant organique ayant une constante diélectrique inférieure à 30, ladite solution pouvant contenir au maximum 15 % en volume d'eau ;
- que, d'autre part, on prépare une solution concentrée d'au moins un sel minéral du métal ou des métaux que l'on désire obtenir sous forme d'oxalate, dans un milieu liquide contenant au moins 25 % en volume d'un second solvant organique choisi parmi le méthanol, l'éthanol, le tétrahydrofuranne, et les polyols liquides à la température ambiante, ou des mélanges de ces solvants, le reste éventuel dudit milieu liquide étant constitué par de l'eau, la concentration totale des sels étant supérieure à 1 mole/litre, ladite solution étant acidifiée pour favoriser la solubilisation des sels et contenant en outre les agents dopants éventuels ;
- puis que l'on verse progressivement ladite solution de sel dans ladite solution d'acide oxalique en agitant cette dernière, pour obtenir un précipité particulaire d'oxalate ;

étant entendu que l'un au moins desdits solvants organiques est un alcool.

Ce dernier procédé, qui ne fait pas partie de l'invention revendiquée ici, est caractérisé notamment par le fait que l'on opère en utilisant des quantités minimales d'eau dans les solutions de sels et d'acide oxalique de déparL En outre, ce procédé permet de régler les dimensions des particules par le choix des solvants, l'utilisation de solvants à faible constante diélectrique, de même que l'absence d'eau (ou la présence de faibles quantités d'eau) favorisant l'obtention de particules de longueur réduite.

Les particules d'oxydes obtenues par le procédé de l'invention ont une bonne homogénéité de dimensions et présentent des propriétés magnétiques intéressantes qui permettent leur utilisation dans la réalisation de matériaux pour l'enregistrement magnétique, par exemple pour l'enregistrement magnétique de haute densité. Cette utilisation fait également partie de l'invention.

Les exemples suivants illustrent l'invention sans toutefois la limiter. Ces exemples illustrent plus particulièrement la préparation de poudres magnétiques convenant pour l'enregistrement haute densité.

Exemple 1

On utilise comme produit de départ une composition de particules aciculaires d'oxalate mixte de formule:

$(Fe_{0,9391}\ Co_{0,0420}\ Zn_{0,0124}\ Ba_{0,0064})^{2+}\ C_2O_4^{2+}$, 2 $H_2O$.

On décompose à l'air dix grammes de cet oxalate dans un four tubulaire que l'on chauffe jusqu'à une température de 300 °C, avec une montée en température de 20 °C/heure.

On effectue ensuite un frittage en portant l'oxyde obtenu, à raison de 300 °C/heure jusqu'à la température 600 °C à laquelle on le maintient pendant 15 minutes. On trempe à l'air de façon à conserver la forme aciculaire des particules et à obtenir une texture interne non granulaire, avec absence de dendrites.

On effectue ensuite une réduction de l'oxyde obtenu par chauffage en atmosphère $N_2/H_2$ (90/10) à raison de 150 °C/heure jusqu'à une température de 350 °C que l'on maintient pendant 2 heures. Après refroidissement à l'air, le produit obtenu est oxydé par chauffage à l'air, avec une montée en température de 150 °C/heure, jusqu'à la température de 430 °C qui est maintenue pendant 2 heures. On effectue le refroidissement par trempe à l'air.

Le produit obtenu se présente sous la forme de particules aciculaires ayant une longueur moyenne de 0,37 ± 0,006 μm, et un diamètre moyen de 0,045 ± 0,09 μm.

La structure de cet oxyde, étudiée par diffraction des rayons X, est du type spinelle lacunaire dérivant de gamma-$Fe_2O_3$.

Les particules obtenues ont la composition suivante (en poids) :

- Co = 3,08 %
- Zn =1,01 %
- Ba = 1,10 %

Les valeurs des propriétés magnétiques sont les suivantes :

- $H_c$ = (62,1 kA/m) (780 Oe)
- σR = (50,1 nTm³/g) (39,9 u.e.m./g)

Analyse thermique différentielle :

température de transformation = 650 °C.

L'oxalate mixte de départ, dont la préparation ne fait pas partie de l'invention, a été préparé de la façon suivante :

On prépare une solution A d'acide oxalique 0,5 molaire en dissolvant 13,75 g d'acide oxalique dans de l'alcool éthylique à 95 % en volume, à température ambiante.

On prépare une solution B deux fois molaire en dissolvant, dans un mélange contenant 60 % d'eau et 40 % d'éthylèneglycol, les sels suivants :

- $FeCl_2, 4H_2O$ : 18,7 g
- $CoCl_2, 6H_2O$ : 1 g
- $ZnCl_2$ : 0,5 g
- $BaCl_2$ : 0,8 g

On ajoute au mélange 0,5 cm³ d'une solution aqueuse d'acide chlorhydrique 12N.

On introduit la solution B dans la solution A fortement agitée, par pulvérisation au dessus de la solution A, à raison de 7 litres/h, de la solution B, à l'aide d'un pulvérisateur permettant d'obtenir des gouttes de 0,8 mm en moyenne.

On lave et sèche les particules d'oxalate qui ont précipité.

Exemple 2

On opère de façon analogue à celle décrite à l'exemple 1, au départ d'un oxalate mixte de formule :

$(Fe_{0,9393}\ Co_{0,0430}\ Zn_{0,0147}\ Ba_{0,0030})^{2+}\ C_2O_4^{2-}, 2\ H_2O$.

L'oxyde final possède des caractéristiques morphologiques et structurales identiques à celles de l'oxyde obtenu à l'exemple 1.

Les particules obtenues ont la composition suivante (en poids) :

- Co = 3,16 %
- Zn = 12 %
- Ba = 0,51 %

Les propriétés magnétiques sont les suivantes :

- Hc = (58,9 kA/m) (740 Oe)
- σR = (55,2 nTm³/g) (43,9 u.e.m./g)

L'oxalate de départ est préparé de façon analogue à la préparation de l'oxalate de départ de l'exemple 1, en utilisant des proportions convenables de chlorure ferreux, de chlorure de cobalt, de chlorure de zinc et de chlorure de baryum.

Exemple 3

On opère de façon analogue à celle décrite à l'exemple 1, au départ d'un oxalate mixte de formule :

$(Fe_{0,9335}\ Co_{0,0433}\ Zn_{0,0108}\ Ba_{0,0124})^{2+}\ C_2O_4^{2-}, 2\ H_2O$.

Les particules d'oxalate de départ présentaient les caractéristiques suivantes :

- longueur moyenne : 0,29 μm
- diamètre moyen : 0,042 μm
- rapport aciculaire moyen : 6,9.

Les particules d'oxyde obtenues présentent les caractéristiques suivantes :

- longueur moyenne : 0,21 μm
- diamètre moyen : 0,045 μm
- rapport aciculaire moyen : 4,7.

Les particules obtenues ont la composition suivante (en poids) :

- Co = 3,16 %
- Zn = 0,87 %
- Ba = 2,1 %

Les propriétés magnétiques sont les suivantes :

- Hc = (59,8 kA/m) (751 Oe)
- σR = (45,2 nTm³/g) (36 u.e.m./g)

Analyse thermique différentielle :

température de transformation = 740 °C

L'oxalate de départ est préparé de façon analogue à celle décrite à l'exemple 1.

Exemple 4

On opère de façon analogue à celle décrite à l'exemple 1, au départ d'un oxalate mixte de formule :

$(Fe_{0,9450}\ Co_{0,0437}\ Ba_{0,0112})^{2+}\ C_2O_4^{2-}, 2\ H_2O$.

Les particules d'oxalate de départ présentaient les caractéristiques suivantes :

- longueur moyenne : 0,30 μm
- diamètre moyen : 0,045 μm
- rapport aciculaire moyen : 6,7.

Les particules d'oxyde obtenues présentent les

caractéristiques suivantes :

- longueur moyenne : 0,19 μm
- diamètre moyen : 0,047 μm
- rapport aciculaire moyen : 4.

Les particules obtenues ont la composition suivante (en poids) :

- Co = 3,19 %
- Ba = 1,91 %

Les propriétés magnétiques sont les suivantes :

- $H_c$ = (63,7 kA/m) (800 Oe)
- σR = (50,9 $nTm_3$/g) (40,5 u.e.m/g)

Analyse thermique différentielle :

température de transformation = 730 °C

L'oxalate de départ est préparé de façon analogue à celle décrite à l'exemple 1.

Exemple 5

On opère de façon analogue à celle décrite à l'exemple 1, mais le produit de départ est un oxalate mixte dopé au bore (sous forme d'acide borique), répondant à la formule suivante :

$$(Fe_{0,9342}\ Co_{0,0435}\ Zn_{0,0112}\ Ba_{0,0111})^{2+}\ C_2O_4^{2-},\ 2\ H_2O\ +$$
$$0,0249 \text{ mole de } H_3BO_3.$$

Le traitement de frittage à l'air est effectué à 630 °C pendant 30 minutes.

Le traitement de réduction est effectué à 430 °C pendant 4 heures 30.

L'oxyde obtenu se présente sous la forme de particules aciculaires de longueur moyenne 0,33 ± 0,06 μm et de diamètre moyen 0,040 ± 0,009 μm.

La structure est du type spinelle lacunaire identique à celle de gamma-$F_2O_3$.

La composition de l'oxyde est la suivante :

- Co = 3,14 %
- Zn = 0,90 %
- Ba = 1,86 %
- B = 0,33 %

Les propriétés magnétiques sont les suivantes :

- Hc = (53,3 kA/m) (670 Oe)
- σR = (42,3 $nTm^3$/g) (33,7 u.e.m/g)

Analyse thermique différentielle :

température de transformation = 780 °C.

L'oxalate de départ est préparé de façon analogue à celle décrite à l'exemple 1. Cet oxalate est ensuite mis en contact avec une solution aqueuse à 3 % en poids d'acide borique, à raison de 500 $cm^3$ de solution pour 15 g d'oxalate.

Exemple 6

On opère comme à l'exemple 5, mais après l'étape de réduction, on coupe l'arrivée d'hydrogène et on chauffe la composition sous azote à 610 °C pendant 3 heures, avec une montée en température de l'ordre de 200 °C/h. On refroidit à l'air, puis effectue l'étape d'oxydation comme à l'exemple 5.

On obtient une composition analogue à celle de l'exemple 5 mais, grâce au traitement thermique supplémentaire, les dimensions moyennes des cristallités sont de 55 nm (550 Angströms), au lieu de 30 nm (300 Angströms) pour la composition de l'exemple 5.

Exemple 7

On opère de façon analogue à celle décrite à l'exemple 1, au départ d'un oxalate mixte de formule :

$$(Fe_{0,9300}\ Co_{0,0437}\ Zn_{0,0263})^{2+}_{0,9929}\ Dy^{3+}_{0,0047}\ C_2O_4^{2-},\ 2\ H_2O.$$

L'oxyde final possède des caractéristiques morphologiques et structurales identiques à celles de l'oxyde obtenu à l'exemple 1.

Les particules obtenues ont la composition suivante (en poids) :

- Co = 3,19 %
- Zn = 2,13 %
- Dy = 0,96 %

Les propriétés magnétiques sont les suivantes :

- $H_c$ = (53,3 kA/m) (670 Oe)
- σR = (45,2 $nTm^3$/g) (36 u.e.m/g)

Analyse thermique différentielle :

température de transformation = 590 °C

L'oxalate de départ est préparé de façon analogue à celle décrite à l'exemple 1. Le dysprosium est introduit sous la forme de chlorure $DyCl_3$.

Exemple 8

On opère de façon analogue à celle décrite à l'exemple 1, au départ d'un oxalate mixte de formule :

$$(Fe_{0,9368}\ Co_{0,0432}Zn_{0,0135}\ Ba_{0,0065})^{2+}_{0,9907}\ Dy^{3+}_{0,0062}\ C_2O_4^{2-},\ 2\ H_2O.$$

L'oxyde final possède des caractéristiques morphologiques et structurales identiques à celles de l'oxyde obtenu à l'exemple 1.

Les particules obtenues ont la composition suivante (en poids) :

- Co = 3,12 %
- Zn = 1,08 %
- Dy = 1,25 %
- Ba = 1,22 %

Les propriétés magnétiques sont les suivantes :

- $H_c$ = (56,5 kA/m) (710 Oe)
- σR = (47,8 $nTm^3$/g) (38 u.e.m/g)

Analyse thermique différentielle :

température de transformation = 720 °C

L'oxalate de départ est préparé de façon analogue à celle décrite à l'exemple 7.

Exemple 9

On opère de façon analogue à celle décrite à l'exemple 1, au départ d'un oxalate mixte de formule :

$$(Fe_{0,9253}\ Co_{0,0442}\ Zn_{0,0264}\ Yb_{0,0041})^{2+}\ C_2O_4^{2-},\ 2\ H_2O.$$

L'oxyde final possède des caractéristiques morphologiques et structurales identiques à celles de l'oxyde obtenu à l'exemple 1.

Les particules obtenues ont la composition suivante (en poids) :

- Co = 3,24 %
- Zn = 2,15 %
- Yb = 0,88 %

Les propriétés magnétiques sont les suivantes :

- $H_c$ = (58,5 kA/m) (735 Oe)
- σR = (47,8 $nTm^3/g$) (38 u.e.m/g)

Analyse thermique différentielle :

température de transformation = 570 °C

L'oxalate de départ est préparé de façon analogue à celle décrite à l'exemple 1. L'ytterbium est introduit sous la forme de chlorure $YbCl_2$.

Exemple 10

On opère de façon analogue à celle décrite à l'exemple 1, au départ d'un oxalate mixte de formule :

$(Fe_{0,9296}\ Co_{0,0438}\ Zn_{0,0266})^{2+}_{0,9927}\ Gd^{3+}_{0,0049}\ C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 3,20 %
- Zn = 2,11 %
- Gd = 0,96 %

Les propriétés magnétiques sont les suivantes :

- $H_c$ = (53,6 kA/m) (673 Oe)
- σR = (44 $nTm^3/g$) (35 u.e.m/g)

Analyse thermique différentielle :

température de transformation = 610 °C

L'oxalate de départ est préparé de façon analogue à celle décrite à l'exemple 1. Le gadolinium est introduit sous la forme de chlorure $GdCl_3$, $6H_2O$.

Exemple 11

On opère de façon analogue à celle décrite à l'exemple 1, au départ d'un oxalate mixte de formule :

$(Fe_{0,9147}\ Co_{0,0482}\ Zn_{0,0334}\ Eu_{0,00375})^{2+}\ C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 3,54 %
- Zn = 2.72 %
- Eu = 0,71 %

Les propriétés magnétiques sont les suivantes :

- $H_c$ = (60,3 kA/m) (758 Oe)
- σR = (48,4 $nTm^3/g$) (38,5 u.e.m/g)

L'oxalate de départ est préparé de façon analogue à celle décrite à l'exemple 1. L'europium est introduit sous la forme de nitrate $Eu(NO_3)_2$.

Exemple 12

On opère de façon analogue à celle décrite à l'exemple 1, au départ d'un oxalate mixte de formule :

$(Fe_{0,9237}\ Co_{0,0438}\ Zn_{0,0325})^{2+}_{0,9972}\ Sb^{3+}_{0,0018}\ C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 3,32 %
- Zn = 2,65 %
- Sb = 0,28 %

Les propriétés magnétiques sont les suivantes :

- $H_c$ = (57,3 kA/m) (720 Oe)
- σR = (33,9 $nTm^3/g$) (27 u.e.m/g)

L'oxalate de départ est préparé de façon analogue à celle décrite à l'exemple 1. L'antimoine est introduit sous la forme de chlorure $SbCl_3$.

Exemple 13

On opère de façon analogue à celle décrite à l'exemple 1, au départ d'un oxalate mixte de formule :

$(Fe_{0,9336}\ Co_{0,0390}\ Zn_{0,0274})^{2+}_{0,9688}\ V^{3+}_{0,0131}\ Ti^{4+}_{0,0058}\ C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 2,83 %
- Zn = 2,20 %
- V = 0,85 %
- Ti = 0,35 %

Les propriétés magnétiques sont les suivantes :

- $H_c$ = (43,8 kA/m) (550 Oe)
- σR = (42,2 $nTm^3/g$) (33,6 u.e.m/g)

L'oxalate de départ est préparé de façon analogue à celle décrite à l'exemple 1. Le titane est introduit sous la forme de $TiCl_3$, et le vanadium sous la forme de $VCl_3$.

Exemple 14

On opère de façon analogue à celle décrite à l'exemple 1, au départ d'un oxalate mixte de formule :

$(Fe_{0,9324}\ Co_{0,0456}\ Zn_{0,0221})^{2+}_{0,9561}\ Ga^{3+}_{0,0216}\ Ti^{4+}_{0,0058}\ C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 3,26 %
- Zn = 1,75 %
- Ga = 1,91 %

- Ti = 0,16%

Les propriétés magnétiques sont les suivantes :

- $H_c$ = (52,5 kA/m) (660 Oe)
- σR = (46,1 $nTm^3/g$) (36,7 u.e.m/g)

L'oxalate de départ est préparé de façon analogue à celle décrite à l'exemple 1. Le gallium est introduit sous la forme de sulfate $Ga_2(SO_4)_3$, et le titane sous la forme de $TiCl_3$

Exemple 15

On opère de façon analogue à celle décrite à l'exemple 1, au départ d'un oxalate mixte de formule :

$(Fe_{0,9438}\,Co_{0,0412}\,Zn_{0,0150})^{2+}_{0,9500}Al^{3+}_{0,0334}\,C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 2,97 %
- Zn = 1,20 %
- Al = 1,16 %

Les propriétés magnétiques sont les suivantes :

- $H_c$ = (50,5 kA/m) (635 Oe)
- σR = (44,5 $nTm^3/g$) (35,4 u.e.m/g)

L'oxalate de départ est préparé de façon analogue à celle décrite à l'exemple 1. L'aluminium est introduit sous la forme de chlorure $AlCl_3$.

Exemple 16

On opère de façon analogue à celle décrite à l'exemple 1, au départ d'un oxalate mixte de formule :

$(Fe_{0,9304}\,Co_{0,0433}\,Zn_{0,0263})^{2+}\,C_2O_4^{2-}$, 2 $H_2O$.

L'oxyde final possède des caractéristiques morphologiques et structurales identiques à celles de l'oxyde obtenu à l'exemple 1.

Les particules obtenues ont la composition suivante (en poids) :

- Co = 3,16 %
- Zn = 2,20%

Les propriétés magnétiques sont les suivantes :

- $H_c$ = (52,9 kA/m) (665 Oe)
- σR = (54,4 $nTm^3/g$) (43,3 u.e.m/g)

Analyse thermique différentielle :

Température de transformation = 590 °C.

L'oxalate de départ est préparé de façon analogue à celle décrite à l'exemple 1.

Exemple 17

On opère de façon analogue à celle décrite à l'exemple 1, au départ d'un oxalate mixte de formule :

$(Fe_{0,912}\,Co_{0,043}\,Zn_{0,012}\,Ba_{0,006}\,Mn_{0,027})^{2+}\,C_2O_4^{2-}$, 2 $H_2O$.

Les particules d'oxyde obtenues ont la composition suivante (en poids) :

- Co = 3,16 %
- Zn = 0,94 %
- Ba = 1,10 %
- Mn = 1,84 %

Propriétés magnétiques :

- Hc = (55 kA/m) (691 Oe)
- σR = (55,2 $nTm^3/g$) (43,9 u.e.m/g)

Exemple 18

On opère de façon analogue à celle décrite à l'exemple 5, au départ d'un oxalate de formule :

$(Fe_{0,953}\,Co_{0,038}\,Ba_{0,009})^{2+}\,C_2O_4^{2-}$, 2 $H_2O$ + 0,043 mole de $H_3BO_3$.

Toutefois, le traitement d'oxydation final est effectué à température de 220 °C (au lieu de 430 °C) pendant 2 heures, ce qui permet de conserver une partie du fer sous la forme de fer (II).

Les particules d'oxalates de départ présentaient les caractéristiques suivantes :

- longueur moyenne : 0,33 µm
- diamètre moyen : 0,042 µm
- rapport aciculaire moyen : 7,9.

Les particules d'oxyde obtenues présentent les caractéristiques suivantes :

- longueur moyenne : 0,22 µm
- diamètre moyen : 0,044 µm
- rapport aciculaire moyen : 5.

Les particules d'oxyde obtenues ont la composition suivante (en poids) :

- Co = 2,81 %
- Ba = 1,49 %
- B = 0,59 %
- $Fe^{2+}$ = 30 % par rapport au fer total.

Propriétés magnétiques :

Hc = (63,7 kA/m) (800 Oe)

σR = (45,5 $nTm^3/g$) (36,2 u.e.m/g)

Température de transformation : 740 °C.

Exemple 19

On opère de façon analogue à celle de l'exemple 1, au départ d'un oxalate de formule :

$(Fe_{0,922}\,Co_{0,035}\,Ca_{0,043})^{2+}\,C_2O_4^{2-}$, 2 $H_2O$.

Les particules d'oxyde obtenues ont la composition suivante (en poids) :

Co = 2,63 %

Ca = 2,18 %

Propriétés magnétiques :

Hc = (43,1 kA/m) (542 Oe)

σR = (55,9 $nTm^3/g$) (44,5 u.e.m/g)

Température de transformation : 720 °C.

Les particules d'oxalate de départ présentaient les caractéristiques suivantes :

- longueur moyenne : 0,28 µm
- diamètre moyen : 0,04 µm
- rapport aciculaire moyen : 7.

Les particules d'oxyde obtenues présentent les caractéristiques suivantes :

- longueur moyenne : 0,19 µm
- diamètre moyen : 0,043 µm
- rapport aciculaire moyen : 4,4.

On opère de façon analogue à celle décrite à l'exemple 1, au départ d'un oxalate de formule :

$(Fe_{0,951}\ Co_{0,036}\ Sr_{0,013})^{2+}\ C_2O_4^{2-}$, 2 $H_2O$.

Les particules obtenues ont la composition suivante (en poids) :

Co = 2,68 %

Sr = 1,42 %

Propriétés magnétiques :

Hc = (51,1 kA/m) (642 Oe)

σR = (56,2 $nTm^3/g$) (44,7 u.e.m/g)

Température de transformation : 780 °C.

Exemple 21

On opère de façon analogue à celle décrite à l'exemple 1, au départ d'un oxalate de formule :

$(Fe_{0,941}\ Co_{0,037}\ Cd_{0,023})^{2+}\ C_2O_4^{2-}$, 2 $H_2O$.

Les particules obtenues ont la composition suivante (en poids) :

Co = 2,56 %

Cd = 0,023 %

Propriétés magnétiques :

Hc = (54,4 kA/m) (683 Oe)

σR = (50,5 $nTm^3/g$) (40,2 u.e.m/g)

Température de transformation : 625 °C.

## Revendications

**1.** Compositions d'oxydes magnétiques particulaires à base d'oxyde de fer (III) et d'oxyde d'au moins un métal divalent choisi parmi le cobalt, le fer, le cuivre, le zinc, le magnésium, le nickel, le manganèse et le cadmium, caractérisées par le fait que lesdites compositions contiennent en outre, sous forme d'oxyde, à raison de 0,2 à 5 % en poids par rapport au poids total, au moins un adjuvant ou substituant choisi parmi les métaux alcalins, les métaux alcalino-terreux, le bore, les éléments des colonnes 3, 4 et 5 de la classification périodique des éléments ayant une masse moléculaire supérieure à 26, à l'exclusion du silicium et à l'exclusion du phosphore les métaux de transition 3d et 4d choisis parmi le scandium, le titane, le vanadium, le chrome, le zirconium, le niobium, et le molydbène, et les terres rares, étant entendu que lorsqu'un métal alcalin ou l'étain est présent, au moins un autre adjuvant ou substituant est également présent, et par le fait que lesdites compositions ont une structure de type spinelle lacunaire.

**2.** Compositions selon la revendication 1, caractérisées par le fait que les éléments des colonnes 3 à 5 de la classification périodique ayant une masse moléculaire supérieure à 26 sont choisis parmi : l'aluminium, le gallium, le germanium, l'arsenic, l'indium, l'antimoine, le bismuth et le plomb.

**3.** Compositions selon l'une quelconque des revendications précédentes, caractérisées par le fait que lesdites terres rares sont choisies parmi : le néodyme, le praséodyme, le samarium, l'europium, le gadolinium, le terbium, le dysprosium, l'holmium, l'erbium, l'ytterbium, le lutétium, le thulium et le cérium.

**4.** Compositions selon l'une quelconque des revendications précédentes caractérisées par le fait que ledit métal divalent est présent à raison de 1 à 10 % en poids de ladite composition.

**5.** Compositions selon l'une quelconque des revendications précédentes, caractérisées par le fait que leur constitution chimique répond à la formule :

$(1\text{-}z)\ Fe_2O_3$ , $zMFe_2O_4$, $yM'^{(n)}O_{n/2}$

dans laquelle :

M représente au moins un métal divalent choisi parmi le cobalt, le fer, le zinc, le cuivre, le magnésium, le nickel, le manganèse et le cadmium,

M' représente un substituant ou adjuvant tel que défini dans la revendication 1, étant entendu que lorsqu'un métal alcalin est présent, au moins un autre adjuvant ou substituant est également présent,

n est la valence de M',

z représente le nombre de moles de métal divalent M, z étant tel que le métal divalent représente 1 à 10 %, de préférence 1 à 5 % du poids total de la composition,

et y représente le nombre de moles de substituants et/ou d'adjuvant M', y étant tel que M' représente 0,2 à 5 % en poids de la composition.

**6.** Compositions selon l'une quelconque des revendications précédentes, caractérisées par le fait que lesdites particules ont des longueurs de 0,05 à 0,5 µm, avec un rapport aciculaire de 2 à 5.

**7.** Compositions selon l'une quelconque des revendications précédentes, caractérisées par le fait qu'au moins 80 % des particules ont une longueur égale à la longueur moyenne ± 0,1 µm et un rapport aciculaire compris entre 2 et 5, ladite longueur moyenne étant comprise entre 0,15 et 0,35 µm.

**8.** Procédé de préparation d'une composition telle que définie dans l'une quelconque des revendications précédentes, comprenant les étapes consistant à décomposer l'oxalate mixte de départ par chauffage à l'air, à réduire le produit obtenu en atmosphère d'hydrogène puis à oxyder par chauffage à l'air le produit réduit, caractérisé par le fait qu'avant l'étape de réduction on soumet les oxydes obtenus après l'étape de décomposition à un traitement thermique en atmosphère oxydante à une température de 550-700 °C environ pendant un temps pouvant varier de 10 min. à 5 heures environ.

**9.** Procédé selon la revendication 8, caractérisé par le fait que, pour le traitement thermique, la montée en température est de 150-300 °C/heure.

**10.** Procédé selon l'une quelconque des revendications 8 et 9, caractérisé par le fait que, dans le but d'augmenter la taille des cristallites, on effectue en outre, après l'étape de réduction, un traitement thermique en atmosphère inerte à une température de 450 à 700 °C.

**11.** Procédé selon l'une quelconque des revendications 8 à 10, caractérisé par le fait que, lorsque les dopants ou substituants ne sont pas présents dans l'oxalate de départ, on les introduit comme additifs auxdits oxalates.

**12.** Procédé selon l'une quelconque des revendications 8 à 11, caractérisé par le fait que l'on effectue le traitement thermique de frittage interne avec une montée en température de 150-300 °C/heure.

**13.** Procédé selon l'une quelconque des revendications 8 à 12, caractérisé par le fait que l'on effectue la décomposition des précurseurs oxaliques et des additifs éventuels à une température de 180 à 300 °C avec une montée en température inférieure à 20 °C/heure.

**14.** Procédé selon l'une quelconque des revendications 8 à 13, caractérisé par le fait que l'on effectue l'étape de réduction en atmosphère constituée par un mélange d'hydrogène et d'un gaz inerte contenant 8 à 30 % en volume d'hydrogène et ne contenant pas de vapeur d'eau ou en contenant moins de 3 %.

**15.** Procédé selon l'une quelconque des revendications 8 à 14, caractérisé par le fait que l'on effectue la réduction à température supérieure à 300 °C.

**16.** Procédé selon l'une quelconque des revendications 8 à 15, caractérisé par le fait que l'on effectue l'étape finale d'oxydation par chauffage à l'air à une température de 100-500 °C, cette température étant comprise entre 100 et 250 °C environ lorsque la composition finale souhaitée contient du fer (II), et entre 200 et 500 °C dans les autres cas.

**17.** Utilisation des compositions particulaires telles que définies dans l'une quelconque des revendications 1 à 7 dans la réalisation de matériaux pour l'enregistrement magnétique.

**Patentansprüche**

**1.** Zusammensetzungen von teilchenförmigen magnetischen Oxyden auf Grundlage von Eisen(III) oxid und eines Oxydes mindestens eines divalenten Metalls, ausgewählt aus Kobalt, Eisen, Kupfer, Zink, Magnesium, Nickel, Mangan und Cadmium, dadurch gekennzeichnet, daß die Zusammensetzungen außerdem 0,2 bis 5 Gew. %, bezogen auf das Gesamtgewicht mindestens einen Zusatzstoff oder einen Substituenten, ausgewählt aus den Alkalimetallen, den Erdalkalimetallen, Bor, den Elementen der Gruppen 3, 4 und 5 des Periodischen Systems mit einer Molekülmasse größer als 26, wobei Silicium und Phosphor ausgeschlossen sind, den Übergangsmetallen 3d und 4d, ausgewählt aus Scandium, Titan, Vanadium, Chrom, Yttrium, Zirkon, Niob und Molybdän und den Seltenerden enthalten, mit der Maßgabe, daß, wenn ein Alkalimetall oder Zinn vorhanden ist, mindestens ein anderer Zusatzstoff oder Substituent ebenfalls vorhanden ist, und dadurch, daß die Zusammensetzungen eine Struktur des lakunaren Spinelltyps aufweisen.

**2.** Zusammensetzungen nach Anspruch 1, dadurch gekennzeichnet, daß die Elemente der Gruppen 3 bis 5 des Periodischen Systems, die eine Molekülmasse größer als 26 aufweisen aus Aluminium, Gallium, Germanium, Arsen, Indium, Antimon, Wismut und Blei ausgewählt sind.

**3.** Zusammensetzungen nach einem der vorhergehenden Ansprüche, dadurch gekennzeichnet, daß die Seltenerden aus Neodym, Praseodym, Samarium, Europium, Gadolinium, Terbium, Dysprosium, Holmium, Erbium, Ytterbium, Lutetium, Thulium und Cer ausgewählt sind.

**4.** Zusammensetzungen nach einem der vorhergehenden Ansprüche, dadurch gekennzeichnet, daß das divalente Metall in einer Menge von 1 bis 10 Gew. % der Zusammensetzung vorhanden ist.

**5.** Zusammensetzungen nach einem der vorhergehenden Ansprüche, dadurch gekennzeichnet, daß ihre chemische Zusammensetzung der folgenden Formel entspricht:

$$(1\text{-}z)\ Fe_2O_3,\ zMFe_2O_4,\ yM'^{(n)}O_{n/2}$$

in der:
M mindestens ein divalentes Metall, ausgewählt aus Kobalt, Eisen, Zink, Kupfer, Magnesium, Nickel, Mangan und Cadmium bedeutet,
M' einen Substituenten oder Zusatzstoff, wie in Anspruch 1 definiert, bedeutet, mit der Maßgabe, daß, wenn ein Alkalimetall vorhanden ist, mindestens ein anderer Zusatzstoff oder Substituent ebenfalls vorhanden ist,
n die Valenz von M' bedeutet,
z die Zahl der Mole des divalenten Metalls M bedeutet, wobei z, wie das divalente Metall, 1 bis 10%, vorzugsweise 1 bis 5 Gew % der gesamten Zusammensetzung darstellt,
und y die Zahl der Mole der Substituenten und/oder des Zusatzstoffs M' bedeutet, wobei y wie M' 0,2 bis 5 Gew.% der Zusammensetzung darstellt.

**6.** Zusammensetzungen nach einem der vorhergehenden Ansprüche, dadurch gekennzeichnet, daß die Teilchen eine Länge von 0,05 bis 0,5 µm, mit einem Länge- Breiteverhältnis von 2 bis 5 aufweisen.

**7.** Zusammensetzungen nach einem der vorhergehenden Ansprüche, dadurch gekennzeichnet, daß mindestens 80% der Teilchen eine Länge gleich der durchschnittlichen Länge ± 0,1 µm besitzen und ein Länge- Breiteverhältnis zwischen 2 und 5 aufweisen, wobei die durchschnittliche Länge zwischen 0,15 und 0,35 µm beträgt.

**8.** Verfahren zur Herstellung einer Zusammensetzung, wie in einem der vorhergehenden Ansprüche definiert, bei dem man das gemischte Oxalatausgangsprodukt durch Erhitzen in Luft zersetzt, das erhaltene Produkt in einer Wasserstoffatmosphäre reduziert, dann das reduzierte Produkt durch Erhitzen in Luft oxydiert, dadurch gekennzeichnet, daß man vor der Stufe der Reduktion die nach der Stufe der Zersetzung erhaltenen Oxyde einer thermischen Behandlung in einer oxidierenden Atmosphäre bei einer Temperatur von 550 bis 700 °C während eines Zeitraumes, der von 10 Minuten bis ungefähr 5 Stunden variieren kann, unterwirft.

**9.** Verfahren nach Anspruch 8, dadurch gekennzeichnet, daß für die thermische Behandlung der Temperaturanstieg 150 bis 300 °C pro Stunde beträgt.

**10.** Verfahren nach einem der vorhergehenden Ansprüche 8 und 9, dadurch gekennzeichnet, daß man zum Zweck der Erhöhung der Kristallitgröße nach der Stufe der Reduktion eine weitere thermische Behandlung in einer inerten Atmosphäre bei einer Temperatur von 450 bis 700°C durchführt.

**11.** Verfahren nach einem der vorhergehenden Ansprüche 8 bis 10, dadurch gekennzeichnet, daß wenn die Dopierungsmittel oder Substituenten nicht im Ausgangsoxalat vorhanden sind man diese als Zusätze in die Oxalate einführt.

**12.** Verfahren nach einem der Ansprüche 8 bis 11, dadurch gekennzeichnet, daß man die thermische Behandlung für das interne Sintern mit einer Erhöhung der Temperatur von 150 bis 300 °C pro Stunde durchführt.

**13.** Verfahren nach einem der vorhergehenden Ansprüche 8 bis 12,, dadurch gekennzeichnet, daß man die Zersetzungen der oxalischen Vorstufen und gegebenenfalls der Zusatzstoffe bei einer Temperatur von 180 bis 300 °C mit einer Temperaturerhöhung von weniger als 20 °C pro Stunde durchführt.

**14.** Verfahren nach einem der Ansprüche 8 bis 13, dadurch gekennzeichnet, daß man die Stufe der Reduktion in einer Atmosphäre, die aus einer Mischung aus Wasserstoff und einem inerten Gas, das 8 bis 30 % im Wasserstoffvolumen enthalten ist und keinen Wasserdampf oder weniger als 3% davon enthält, durchführt.

**15.** Verfahren nach einem der Ansprüche 8 bis 14, dadurch gekennzeichnet, daß man die Reduktion bei einer Temperatur über 300 °C durchführt.

**16.** Verfahren nach einem der Ansprüche 8 bis 15, dadurch gekennzeichnet, daß man die letzte Oxidationsstufe durch Erhitzen in Luft auf eine Temperatur von 100 bis 500 °C durchführt, wobei die Temperatur zwischen 100 und 250 °C, wenn das gewünschte Endprodukt Eisen(II) enthält, und zwischen 200 und 500 °C in den anderen Fällen, beträgt.

**17.** Verwendung der teilchenförmigen Zusammensetzungen, wie in einem der vorhergehenden Ansprüche 1 bis 7 definiert, zur Herstellung von Material für magnetische Aufzeichung.

## Claims

**1.** Particulate magnetic oxide compositions based on iron(III) oxide and oxide of at least one divalent

metal chosen from cobalt, iron, copper, zinc, magnesium, nickel, manganese and cadmium, characterized in that the said compositions contain in addition, in the form of the oxide, at a rate of 0.2 to 5% by weight in respect of the total weight, at least one additive or substituent chosen from the alkali metals, the alkaline-earth metals, boron, the elements in columns 3, 4 and 5 of the periodic classification of the elements having a molecular mass greater than 26, excluding silicon and excluding phosphorus, the 3d and 4d transition metals chosen from scandium, titanium, vanadium, chromium, yttrium, zirconium, niobium and molybdenum, and the rare earths, it being understood that when an alkali metal or tin is present at least one other additive or substituent is also present, and in that the said compositions have a structure of the lacunar spinel type.

**2.** Compositions according to Claim 1, characterized in that the elements of columns 3 to 5 of the periodic classification having a molecular mass greater than 26 are chosen from: aluminium, gallium, germanium, arsenic, indium, antimony, bismuth and lead.

**3.** Compositions according to either one of the preceding claims, characterized in that the said rare earths are chosen from: neodymium, praseodymium, samarium, europium, gadolinium, terbium, dysprosium, holmium, erbium, ytterbium, lutetium, thulium and cerium.

**4.** Compositions according to any one of the preceding claims, characterized in that the said divalent metal is present at a rate of 1 to 10% by weight of the said composition.

**5.** Compositions according to any one of the preceding claims, characterized in that their chemical constitution corresponds to the formula:

$$(1\text{-}z)Fe_2O_3 .\ zMFe_2O_4 .\ yM'^{(n)}O_{n/2}$$

In which:

M represents at least one divalent metal chosen from cobalt, iron, zinc, copper, magnesium, nickel, manganese and cadmium,

M' represents a substituent or additive as defined in Claim 1, it being understood that when an alkali metal is present, at least one other additive or substituent is also present,

n is the valency of M',

z represents the number of mols of divalent metal M, z being such that the divalent metal represents 1 to 10%, preferably 1 to 5%, of the total weight of the composition,

and y represents the number of mols of substituents and/or of additive M', y being such that M' represents 0.2 to 5% by weight of the composition.

**6.** Compositions according to any one of the preceding claims, characterized in that the said particles have lengths of 0.05 to 0,5 µm, with an acicular ratio of 2 to 5.

**7.** Compositions according to any one of the preceding claims, characterized in that at least 80% of the particles have a length equal to the mean length ± 0.1 µm and an acicular ratio of between 2 and 5, the said mean length being between 0.15 and 0. 35 µm.

**8.** A process for the preparation of a composition such as defined in any one of the preceding claims, comprising the stages consisting of decomposing the starting mixed oxalate by heating in air, reducing the product obtained in a hydrogen atmosphere and then oxidising the reduced product by heating in air, characterized in that before the reduction stage the oxides obtained after the decomposition stage are subjected to a heat treatment in an oxidising atmosphere at a temperature of about 550-700°C for a time which may vary from 10 min. to about 5 hours.

**9.** Process according to Claim 8, characterized in that the temperature increase for the heat treatment is 150-300°C/hour.

**10.** Process according to either one of Claims 8 and 9, characterized in that, with the object of increasing the size of the crystallites, an additional heat treatment is carried out in an inert atmosphere at a temperature of 450 to 700°C after the reduction stage.

**11.** Process according to any one of Claims 8 to 10, characterized in that, when the dopes or substituents are not present in the starting oxalate, they are introduced into the said oxalates as additives.

**12.** Process according to any one of Claims 8 to 11, characterized in that the heat treatment for internal fritting is carried out with a temperature increase of 150-300°C/hour.

**13.** Process according to any one of Claims 8 to 12, characterized in that decomposition of the oxalic precursors and the optional additives is carried out at a temperature of 180 to 300°C with a temperature increase of less than 20°C/hour.

**14.** Process according to any one of Claims 8 to 13, characterized in that the reduction stage is carried out in an atmosphere constituted by a mixture of hydrogen and an inert gas containing 8 to 30%

by volume of hydrogen and containing no water vapour or containing less than 3% of the latter.

**15.** Process according to any one of Claims 8 to 14, characterized in that the reduction is carried out at a temperature greater than 300°C.

**16.** Process according to any one of Claims 8 to 15, characterized in that the final oxidation stage is carried out by heating in air at a temperature of 100-500°C, this temperature being between 100 and about 250°C when the desired final composition contains iron(II), and between 200 and 500°C in the other cases.

**17.** The use of particulate compositions as defined in any one of Claims 1 to 7 in the manufacture of materials for magnetic recording.